# FASCICULE DE BREVET EUROPEEN

(11) **EP 2 419 787 B1**
(45) Date de publication et mention de la délivrance du brevet: **01.10.2014**
(21) Numéro de dépôt: 10723677.0
(22) Date de dépôt: 15.04.2010
(51) Int. Cl.: G02F 1/155

(54) **DISPOSITIF ÉLECTROCHROME À TRANSPARENCE CONTRÔLÉE**
ELEKTROCHROME VORRICHTUNG MIT KONTROLLIERTER TRANSMISSION
ELECTROCHROMIC APPARATUS WITH CONTROLLED TRANSMISSION

(30) Priorité: 16.04.2009 FR 0952491
(43) Date de publication de la demande: 22.02.2012
(73) Titulaire: Sage Electrochromics, Inc., Faribault, MN 55021 (US)
(72) Inventeur: LAMINE, Driss, F-92160 Antony (FR); VALENTIN, Emmanuel, F-94420 Le Plessis Trevise (FR); DUBRENAT, Samuel, F-75017 Paris (FR)
(74) Mandataire: Neuviale, Bertrand
(86) Numéro de dépôt international: PCT/FR2010/050723
(87) Numéro de publication internationale: WO 2010/119228

(56) Documents cités:
- WO-A-02/06889
- US-A- 4 878 743
- US-A- 5 530 581
- US-A- 5 724 175
- US-A1- 2008 030 836

## Description

La présente invention concerne un dispositif électrochrome à transparence contrôlée, notamment destiné à constituer un vitrage électrocommandable ainsi qu'un procédé de fabrication de celui-ci. Elle concerne également un vitrage électrochrome pourvu d'un tel dispositif ainsi que l'utilisation de ce dernier pour des applications les plus diverses.

On connaît des vitrages qui possèdent une capacité de transmission de la lumière qui est réglable à partir d'un bon niveau de transparence jusqu'à une opacité la plus totale. De tels vitrages ont montré des applications dans les domaines techniques les plus divers.

On peut ainsi les utiliser en tant que vitrages d'une habitation afin, par exemple, d'ajuster le niveau d'ensoleillement d'un local en fonction des conditions extérieures et des souhaits des utilisateurs. On peut également les utiliser en tant que volets d'isolation pour préserver l'intimité des habitants d'un local soit vis-à-vis de l'extérieur, soit vis-à-vis de pièces contiguës.

On peut également, dans le domaine automobile, faire appel à de tels dispositifs pour, par exemple, régler le niveau de transparence du pare-brise et/ou des vitres latérales ou du vitrage de toit d'une voiture, ainsi que sur certains accessoires de celle-ci, tels que notamment les rétroviseurs, afin de contrôler le flux de la lumière réfléchie vers le conducteur et éviter l'éblouissement de ce dernier. On peut bien entendu les utiliser dans d'autres domaines tels que notamment le domaine aéronautique pour contrôler par exemple la transparence des hublots des aéronefs.

On sait que les dispositifs électrochromes comportent une couche d'un matériau électrochrome en mesure d'insérer réversiblement et simultanément des ions et des électrons, dont les états d'oxydation qui correspondent aux états insérés et désinsérés sont d'une coloration distincte lorsqu'ils sont soumis à une alimentation électrique appropriée; l'un de ces états présentant une transmission lumineuse plus élevée que l'autre. Le matériau électrochrome peut être par exemple à base d'oxyde de tungstène et doit être mis en contact avec une source d'électrons, telle que par exemple une couche électroconductrice transparente, et d'une source d'ions (des cations ou des anions) telle qu'un électrolyte conducteur ionique. On sait qu'une contre-électrode, en mesure également d'insérer de façon réversible des cations, doit être associée à la couche de matériau électrochrome, symétriquement par rapport à celle-ci, de sorte que, macroscopiquement, l'électrolyte apparaît comme un simple médium des ions. La contre-électrode doit être constituée d'une couche neutre en coloration ou, du moins, transparente ou peu colorée quand la couche électrochrome est à l'état coloré.

L'oxyde de tungstène étant un matériau électrochrome cathodique, c'est-à-dire que son état coloré correspond à l'état le plus réduit, un matériau électrochrome anodique à base d'oxyde de nickel ou d'iridium peut être par exemple utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline) ou le bleu de Prusse.

On peut ranger actuellement les systèmes électrochromes en deux catégories en fonction de l'électrolyte utilisé.

Dans la première catégorie l'électrolyte peut ainsi se présenter sous la forme d'un polymère ou d'un gel, tel que par exemple un polymère à conduction protonique, tel que ceux décrits dans les brevets européens EP 0 253 713, et EP 0 670 346 ou un polymère à conduction d'ions lithium, tel que ceux décrits dans les brevets EP 0 382 623, EP 0 518 754 ou EP 0 532 408. On parle alors de systèmes électrochromes mixtes.

Dans la seconde catégorie, l'électrolyte peut également être constitué d'une couche minérale formant un conducteur ionique qui est isolé électriquement. Ces systèmes électrochromes sont alors désignés comme étant « tout solide ». On pourra se référer aux brevets européens EP 0 867 752 et EP 0 831 360.

On connaît d'autres types de systèmes électrochromes, tels que notamment les systèmes électrochromes dits « tout polymère », dans lesquels deux couches électroconductrices sont disposées de part et d'autre d'un empilement comprenant un polymère à coloration cathodique, un polymère isolant électronique conducteur ionique (de H⁺ ou Li⁺ tout particulièrement) et enfin un polymère à coloration anodique (tel que la polyaniline ou le polypyrrole).

On sait que la technique actuelle de fabrication des dispositifs électrochromes consiste, de façon schématique, à déposer successivement sur un substrat support, transparent ou non, une électrode électroconductrice inférieure, généralement une couche d'oxyde d'indium et d'étain (ITO) pour « Indium Tin Oxide », des couches fonctionnelles électrochromes, par exemple d'oxyde d'iridium (IrOx),d'oxyde de tungstène (WO3),d'oxyde de tantale (TA2O5), et une électrode électroconductrice supérieure. Habituellement l'empilement se termine par un polymère de feuilletage et un contre-substrat.

Bien entendu les deux électrodes électroconductrices inférieure et supérieure doivent être réunies à des connecteurs d'amenée de courant respectifs. Cette connexion est habituellement obtenue au moyen de clinquants métalliques qui sont respectivement mis en contact avec l'électrode supérieure et avec l'électrode inférieure.

Si le contact du connecteur avec l'électrode supérieure ne présente guère de difficultés dans le principe, il n'en est pas de même en ce qui concerne le contact du connecteur avec l'électrode inférieure en raison de sa non accessibilité due au dépôt des différentes couches. C'est pourquoi on a proposé de préserver une zone de celle-ci, dite zone de connexion, au moyen d'un masque adhésif pendant le dépôt des couches électrochromes. Une fois le dépôt des différentes couches effectué il suffit alors de retirer l'adhésif pour ôter du même coup les couches déposées sur celui-ci et avoir ainsi accès à l'électrode inférieure, cette dernière recevant alors le connecteur qui lui est destiné.

Cette technique présente un certain nombre d'inconvénients liés notamment d'une part à l'utilisation du masque adhésif et, d'autre part, aux moyens utilisés pour assurer la fixation des connecteurs sur les électrodes.

Concernant le masque adhésif, on notera que la pose de celui-ci est une opération longue et délicate, dans la mesure où, d'une part, il doit être appliqué de façon parfaite sur l'électrode inférieure afin de ne pas perturber le dépôt des couches ultérieures et, d'autre part, la longueur à recouvrir est importante, notamment lorsque la connexion de l'électrode inférieure se fait sur toute la périphérie du substrat.

Ensuite, lors du retrait du masque, les couches qui ont été déposées sur celui-ci ont tendance à s'effriter et à se redéposer ensuite sous forme de poussières sur l'empilement, créant ainsi des dysfonctionnements du dispositif. C'est pourquoi, afin d'éviter un tel inconvénient, le retrait du masque s'accompagne habituellement d'une aspiration, ce qui impose pour cette opération l'intervention de deux opérateurs.

Par ailleurs, il arrive que lors des phases de dépôt des différentes couches qui suivent l'application du masque adhésif, ce dernier se rétracte sous l'effet de la chaleur, si bien que, lors de l'application de la couche électroconductrice formant l'électrode supérieure, cette dernière peut être amenée à venir en contact avec l'électrode inférieure créant ainsi un court-circuit plus ou moins partiel ayant pour effet de diminuer le contraste que le dispositif est en mesure de délivrer. Afin de pallier un tel risque on est amené à réaliser un margeage contrôlé de la périphérie de la zone recouverte par le masque, c'est-à-dire une découpe traversant les différentes couches déposées et s'arrêtant au niveau de celle formant l'électrode inférieure.

De plus, la sélection du masque adhésif est une opération délicate dans la mesure où celui-ci doit conserver son intégrité malgré les diverses contraintes physiques auxquelles il est soumis au cours des étapes de déposition des différentes couches. Il doit ainsi être notamment en mesure de subir des dépressions importantes sans être sujet au dégazage, et présenter un bonne tenue en température. En conséquence d'un tel cahier des charges très strict on comprend que son coût est habituellement élevé.

Concernant les problèmes liés à la liaison entre les connecteurs et les électrodes, on comprend que si, dans la technique précitée, il est possible d'assurer cette liaison par soudure au niveau de l'électrode inférieure, il n'en est pas de même en ce qui concerne l'électrode supérieure puisque toute soudure sur celle-ci a pour effet de la percer en provoquant une liaison avec l'électrode inférieure rendant ainsi l'ensemble du vitrage inutilisable par court-circuit. C'est pourquoi, au niveau de l'électrode supérieure, la liaison électrique est assurée par un simple contact entre le connecteur et l'électrode.

Outre le fait que ce contact électrique est imparfait, ce mode de contact risque d'entraîner à l'usage une perforation de l'électrode et donc une dégradation de la fonctionnalité du vitrage.

On connaît également pour les dispositifs électrochromes la technique de margeage périphérique par laser et de soudure d'amenées de courant sur l'électrode supérieure tel que dévoilé dans le document US 5,724,175.

De plus, en raison de la mauvaise répartition du courant au niveau de l'électrode on constate une dégradation de la durabilité du dispositif.

La présente invention a pour but de remédier aux inconvénients précités en proposant un dispositif électrochrome à transparence contrôlée dans lequel les électrodes peuvent être réunies aux connecteurs d'amenée de courant par soudure et notamment par soudure à ultrasons.

La présente invention a ainsi pour objet un dispositif électrochrome selon la revendication 1.

Le substrat porteur sera préférentiellement un substrat à fonction verrière, notamment en verre ou en matière plastique.

Suivant l'invention la zone libre de l'électrode inférieure sera reliée par soudure au connecteur d'amenée du courant de l'électrode supérieure et au moins une des liaisons par soudure entre un connecteur d'amenée du courant et une électrode sera une soudure de type à ultrasons.

Dans une variante de mise en oeuvre de l'invention l'électrode supérieure sera recouverte d'au moins une couche de protection contre l'humidité, cette dernière étant traversée par ledit margeage sélectif.

Suivant l'invention au moins l'une des électrodes du dispositif sera formée d'au moins une couche d'oxyde mixte d'étain et d'indium (ITO).

Dans une variante de mise en oeuvre de l'invention l'électrode supérieure pourra être en contact avec un réseau de fils fins, conducteurs du courant électrique et reliés à au moins un connecteur. Ce réseau de fils sera préférentiellement supporté par un support en polymère thermoplastique, notamment constitué de polyuréthane ou de polyvinylbutyral (PVB).

Les zones libres définies par les margeages de type total et sélectif seront préférentiellement situées en périphérie du substrat qui aura notamment une forme rectangulaire. Par ailleurs les margeages de type total et sélectif pourront être respectivement réalisés parallèlement à des côtés opposés du substrat.

Selon l'invention, les margeages de type total seront réalisés aux quatre coins du substrat de façon à constituer des zones libres sensiblement en forme d'équerre, et les margeages de type sélectif seront réalisés sensiblement au milieu de la périphérie des côtés de celui-ci de façon à constituer des zones libres sensiblement rectangulaires.

La présente invention a également pour objet un procédé de fabrication d'un dispositif électrochrome selon la revendication 9.

Préférentiellement les margeages seront réalisés au moyen d'un faisceau laser.

Suivant l'invention au moins une des liaisons par soudure sera réalisée par soudure ultrasons.

Par ailleurs on pourra réaliser sur un même substrat porteur, plusieurs dispositifs électrochromes. Pour ce faire, une fois ces derniers terminés, on réalisera une découpe du substrat porteur et de l'ensemble des couches déposées sur celui-ci, de façon à constituer des dispositifs électrochromes spécifiques.

La présente invention a également pour objet un vitrage électrochrome, caractérisé en ce qu'il comporte un dispositif électrochrome du type décrit précédemment présentant notamment une transmission et/ou une réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

La présente invention a également pour objet l'utilisation d'un tel vitrage en tant que vitrage pour le bâtiment, vitrage pour l'automobile, vitrage de véhicules industriels ou de transport collectif, ferroviaire, maritime, aérien, agricole , engin de chantier, rétroviseurs, miroirs, Display et affichage, obturateur pour dispositifs d'acquisition d'images.

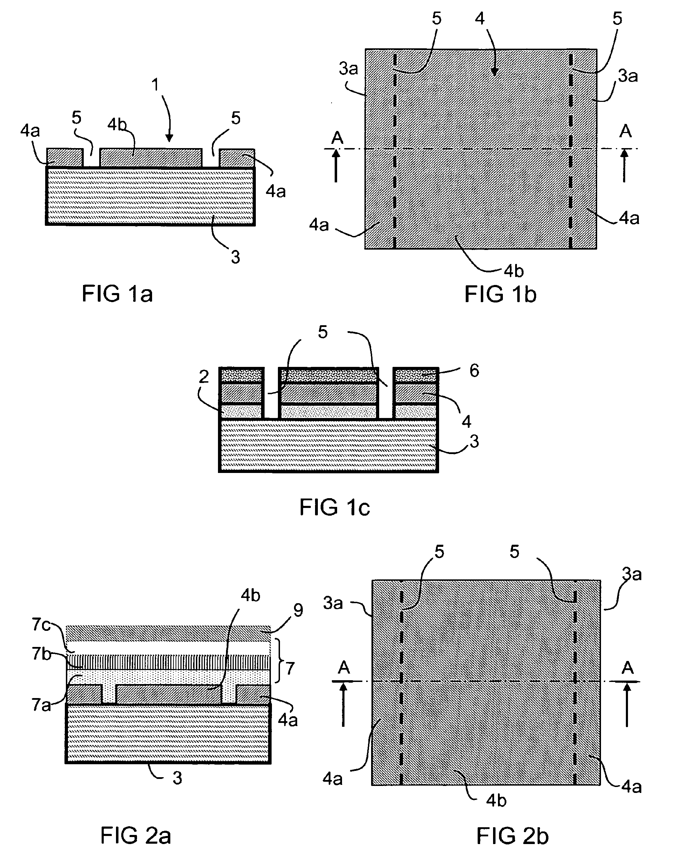

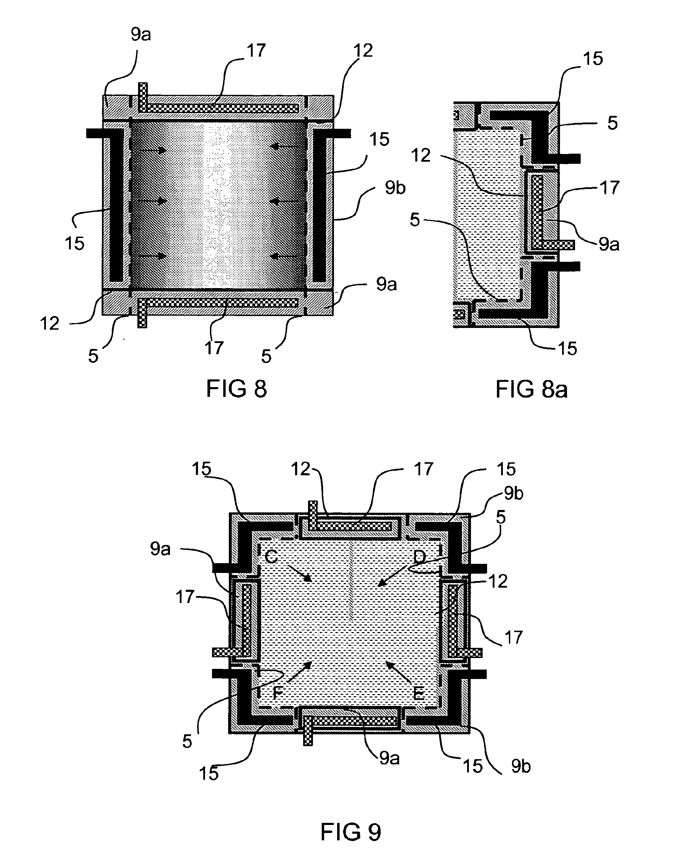

On décrira ci-après, à titre d'exemple non limitatif, une forme d'exécution de la présente invention, en référence au dessin annexé sur la figure 9.
La figure la est une vue schématique en coupe verticale et transversale, suivant la ligne AA de la figure 1b, illustrant un margeage total d'un dispositif électrochrome,
La figure 1b est une vue de dessus schématique illustrant le margeage total représenté sur la figure 1a,
La figure 1c est une vue en coupe verticale et transversale illustrant une variante du margeage total représenté sur les figures 1a et 1b,
Les figures 2a et 2b sont des vues schématiques respectivement en coupe verticale suivant la ligne AA de la figure 2b et en vue de dessus, illustrant une phase de réalisation d'un margeage total,
Les figures 3a et 3b sont des vues schématiques respectivement en coupe verticale suivant la ligne BB de la figure 3b et en vue de dessus, illustrant une autre phase de réalisation d'un margeage sélectif,
Les figures 4a et 4b sont des vues schématiques respectivement en coupe verticale suivant la ligne AA de la figure 4b et en vue de dessus, illustrant une phase de liaison par soudure d'un élément de connexion sur l'électrode supérieure du dispositif représenté sur les figures précédentes et ce non suivant l'invention,
Les figures 5a et 5b sont des vues schématiques respectivement en coupe suivant la ligne BB de la figure 5b et en vue de dessus, illustrant une phase de liaison par soudure d'un élément de connexion sur l'électrode inférieure du dispositif, non suivant l'invention, et représenté sur les figures précédentes,
La figure 6 est une vue schématique en coupe verticale et transversale illustrant la dernière phase de réalisation du dispositif, non suivant l'invention, et représenté sur les figures précédentes,
La figure 7 est une vue schématique en coupe verticale suivant la ligne BB de la figure 5b, d'une autre variante de dispositif non suivant l'invention,
La figure 8 est une vue de dessus illustrant le profil d'occultation du dispositif, non suivant l'invention, et représenté sur les figures précédentes,
La figure 9 est une vue de dessus d'un mode de mise en oeuvre d'un dispositif suivant l'invention,
La figure 8a est vue de dessus partielle d'une variante du dispositif représenté sur la figure 9,

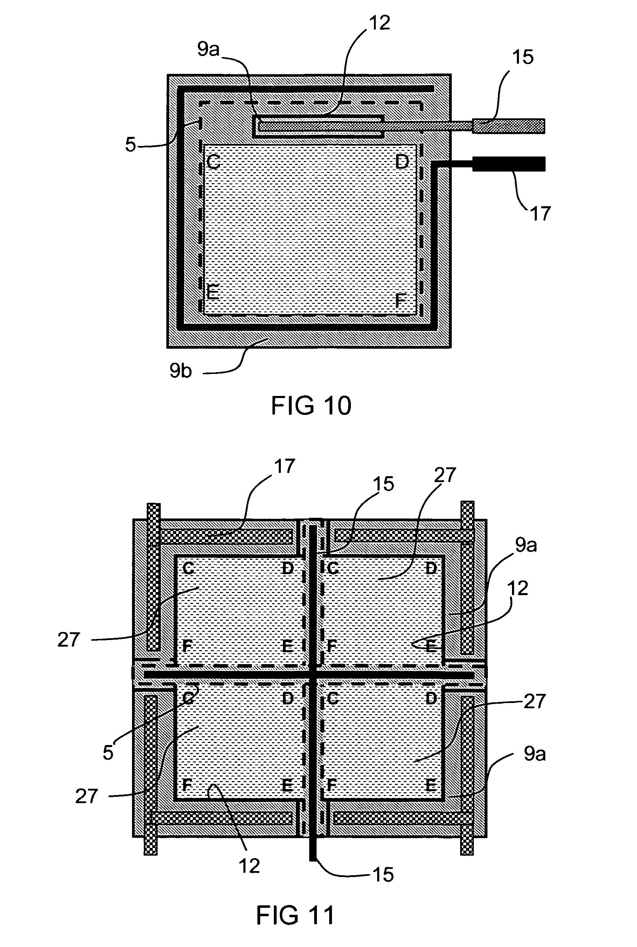

Les figures 10 et 11 sont des vues de dessus de deux variantes du dispositif non suivant l'invention,

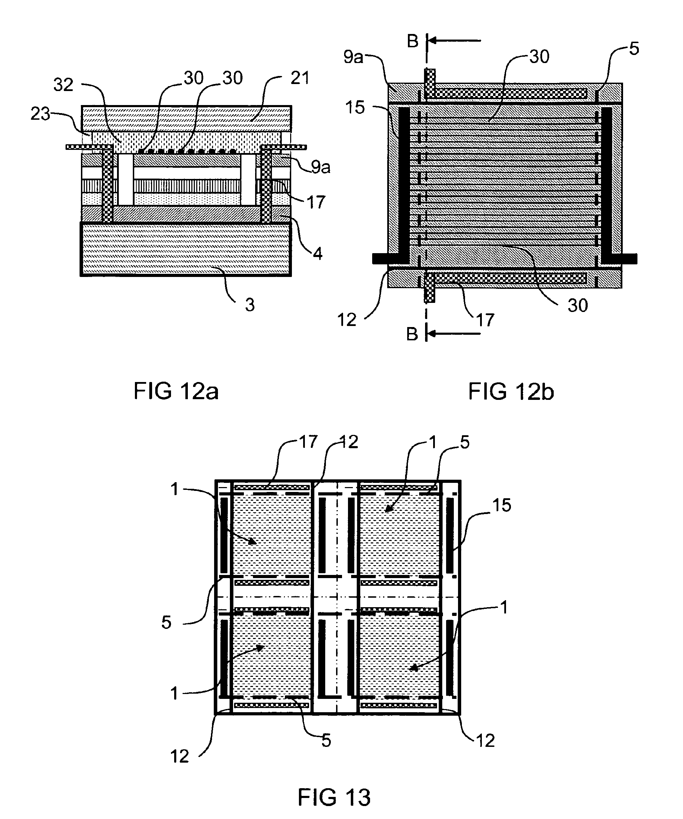

Les figures 12a et 12b sont des vues schématiques respectivement en coupe verticale suivant la ligne BB de la figure 12b, et en vue de dessus, d'un autre dispositif non suivant l'invention,
La figure 13 est une vue de dessus schématique d'un autre mode de mise en oeuvre non suivant l'invention.

On a représenté sur les figures 1a à 5b les phases essentielles de différents modes de réalisation d'un dispositif électrochrome à transmission contrôlée 1 non suivant l'invention qui est notamment destiné à être appliqué à la constitution d'un vitrage dont on souhaite pouvoir régler la transparence.

Dans une première phase, ainsi que représenté sur les figures 1a et 1b, on dépose sur un substrat porteur 3, constitué d'un support verrier, une couche électroconductrice destinée à former une électrode inférieure 4. Ce dépôt est notamment effectué par un procédé classique de pulvérisation cathodique. De façon connue cette électrode pourra être de type métallique ou de type dit TCO (oxyde conducteur transparent) en In₂O₃:Sn(ITO), SnO₂:F, ZnO :Al. Elle pourra également être de type multi-couche du type TCO/métal/TCO, ce métal étant choisi notamment parmi l'argent, l'or, le platine, le cuivre, ou un multi-couche du type NiCr/métal/NiCr, le métal étant choisi notamment parmi l'argent, l'or, le platine, ou le cuivre.

Dans une seconde phase du procédé on réalise, en bordure de deux côtés opposés 3a du substrat verrier 3, un margeage rectiligne 5 parallèle à ces derniers.

On entendra par margeage dans le présent texte, une découpe faite à travers certaines des couches du dispositif, dont la largeur sera suffisante pour que chaque partie d'une couche découpée soit isolée électriquement de l'autre partie. Le margeage sera dit total lorsqu'il s'étendra en profondeur à partir de la première des couches qui sera isolante sans traverser celle-ci, et traversera les différentes autres couches qui la séparent du substrat 3 jusqu'à atteindre celui-ci. Le margeage sera dit sélectif lorsqu'il s'étendra d'une couche donnée, en traversant celle-ci ainsi que les couches qui la séparent de l'électrode inférieure 4 jusqu'à cette dernière sans la traverser. Ces margeages seront préférentiellement réalisés, de façon connue, au moyen d'un faisceau laser, mais on pourra également faire appel à tout autre moyen permettant de les réaliser ainsi qu'exposé précédemment.

Ainsi que représenté (en traits pointillés) sur la figure 1b le margeage 5 sera du type dit total. On pourrait bien entendu, ainsi que représenté sur la figure 1c, faire précéder le dépôt de la couche formant l'électrode inférieure 4 par le dépôt d'une couche d'accrochage 2 ou une couche barrière à la migration des alcalins provenant du substrat, notamment constituée de nitrure de silicium et/ou d'oxyde mixte de silice et d'étain. Dans cette variante le margeage total 5 traverse alors les couches 2 et 4. Par ailleurs, dans l'hypothèse où les couches qui suivent l'électrode inférieure 4 seraient des couches conductrices du courant électrique, on procéderait au dépôt de ces dernières avant de réaliser le margeage total. Ainsi, dans la variante représentée sur la figure 1c, l'électrode inférieure 4 est recouverte d'une couche 6 d'oxyde d'Iridium IrOx qui est conductrice, si bien que cette dernière est traversée par le margeage total 5.

Chacun des deux margeages effectués partage ainsi la surface de l'électrode inférieure 4 en deux zones, à savoir une première zone 4a dite zone libre et une seconde zone 4b dite zone active, qui est commune aux deux margeages, et qui contient la zone qui sera la surface active CDEF du dispositif, c'est-à-dire la surface dont le niveau de transmission de la lumière sera contrôlé, ainsi qu'exposé ci-après.

On dépose ensuite, ainsi que représenté sur les figures 2a et 2b, une série de couches 7 formant l'ensemble fonctionnel électrochrome, la première de celle-ci étant une première couche électroactive 7a déposée dans un état d'isolant électrique, suivie d'une couche d'électrolyte 7b et d'une seconde couche électroactive 7c. On dépose ensuite la couche formant l'électrode supérieure 9.

Dans la mesure où la première couche 7a déposée après la réalisation des deux margeages 5 de type total est une couche isolante, il en résulte que les zones 4a et 4b sont non seulement isolées électriquement l'une de l'autre mais également des autres couches de l'empilement.

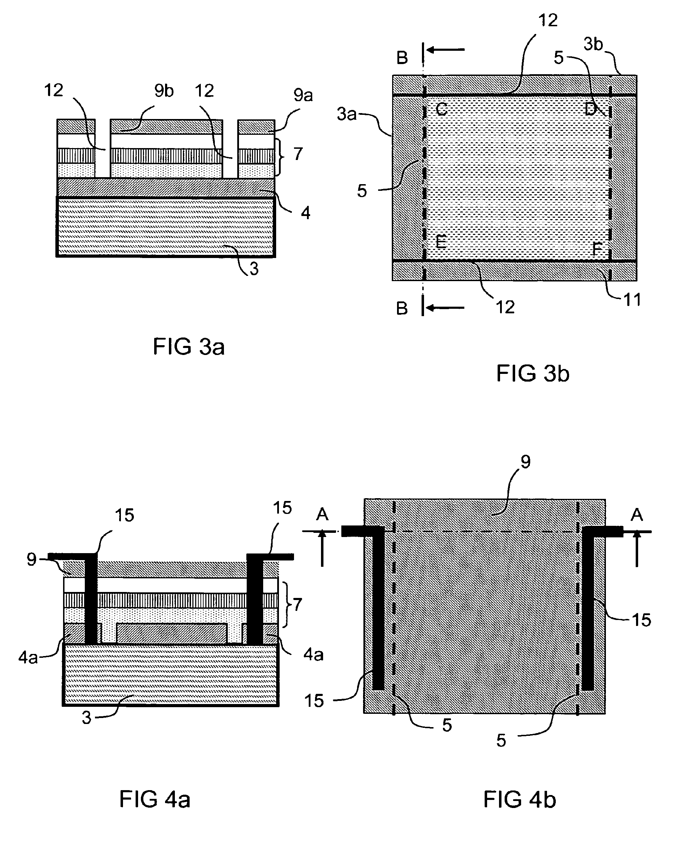

On réalise ensuite, ainsi que représenté sur les figures 3a et 3b, deux autres margeages 12 en bordure des deux autres côtés opposés 3b du substrat 3, qui sont représentés en traits pleins sur lés figures. Ces deux margeages sont des margeages sélectifs, si bien qu'ils s'étendent à travers l'électrode supérieure 9 et à travers les couches fonctionnelles électrochromes 7 pour s'arrêter au niveau de l'électrode inférieure 4 sans traverser celle-ci. Ces deux margeages 12 partagent ainsi la surface de l'électrode supérieure 9 en deux zones, à savoir une première zone 9a, dite zone libre, et une seconde zone 9b, dite zone active, et qui est commune aux deux margeages et qui contient la surface active CDEF du dispositif ainsi qu'exposé ci-après.

On constate que chacune des zones libres 4a définie par chaque margeage total et chacune des zones libres 9a définie par chaque margeage sélectif est isolée électriquement d'une part des autres zones libres 4a et 9a et, d'autre part, des zones actives respectives 4b et 9b des électrodes inférieure et supérieure contenant la surface active CDEF du dispositif. Chacune de ces zones libres d'une électrode peut donc être réunie à une zone active de l'autre électrode sans causer de court-circuit.

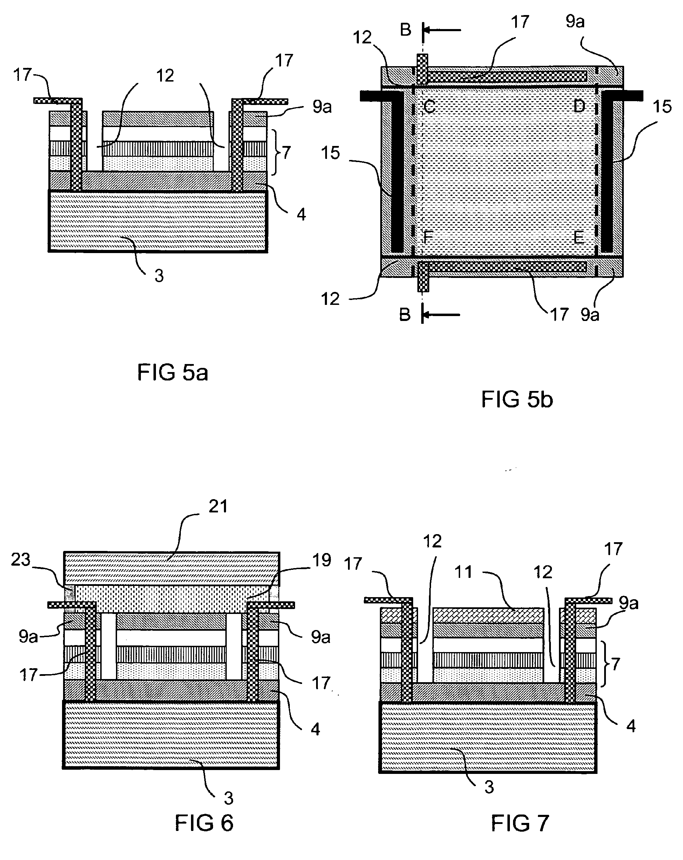

Le dispositif 1 permet donc, ainsi que représenté sur la figure 4a, de réunir par soudure, notamment par soudure ultrasons, une barrette de connexion 15 à l'électrode supérieure 9 avec association au cours de cette opération de la zone libre 4a de l'électrode inférieure 4 disposée au droit de celle-ci, c'est-à-dire sur une perpendiculaire à la surface du substrat, sans que cette association ne vienne générer un court-circuit. De même, ainsi que représenté sur les figures 5a et 5b, on pourra souder une barrette de connexion 17 à l'électrode inférieure 4, à partir de la zone libre 9a de l'électrode supérieure 9 sans que cette opération ne vienne générer un court-circuit.

Une fois les barrettes de connexion 15 et 17 raccordées par soudure on pourra terminer l'empilement de façon classique, ainsi que représenté sur la figure 6, en déposant sur l'empilement un intercalaire de feuilletage 19, notamment constitué de façon connue d'un polymère thermoplastique, par exemple en polyuréthane ou en polyvinylbutyral (PVB), puis, pour terminer, un contre-substrat 21. Les dimensions de l'intercalaire de feuilletage 19 seront préférentiellement légèrement inférieures à celles des autres couches de l'empilement, de façon à permettre la mise en place, sur la périphérie, d'un joint d'étanchéité 23 qui sera traversé par les barrettes de connexion 15 et 17 et qui contribuera ainsi à leur maintien. L'ensemble sera ensuite feuilleté.

Dans ce mode de mise en oeuvre non suivant l'invention la surface active CDEF du dispositif est délimitée par les margeages de types total 5 (en traits pointillés sur le dessin) et de type sélectif 12 (en traits continus sur le dessin). Le dispositif 1 permet de réduire à un minimum les surfaces des zones libres au droit desquelles s'effectuent les connexions, favorisant ainsi la surface active du dispositif par rapport aux solutions de l'état antérieur de la technique.

Bien entendu, le dispositif pourra ne pas être feuilleté et l'on pourra alors terminer l'empilement par le dépôt dune couche 11 de protection contre l'humidité, qui, ainsi que représenté sur la figure 7 sera traversée par le margeage sélectif 12.

Par ailleurs, on sait que lorsque l'on commande une variation de transmission de la surface active, par exemple une variation de transparence, celle-ci ne se traduit pas par une variation uniforme immédiate de densité de l'ensemble de cette surface active. En effet, pour des problèmes liés notamment à la résistivité des différentes couches électrochrome concernées, ainsi qu'à une différence de résistivité des électrodes supérieure et inférieure, la variation géométrique dans le temps de la transparence de la surface active, dénommée ci-après profil d'occultation, peut prendre différents aspects en fonction de la disposition des barrettes de connexion 15 et 17 sur les électrodes, ainsi qu'exposé ci-après.

La technique de margeage et de soudure exposée précédemment permet au concepteur de réaliser avec la plus grande liberté des dispositifs électrochromes dont les barrettes de connexion peuvent avoir des formes et des dispositions sur les électrodes qui sont fonction du profil d'occultation que l'on souhaite obtenir.

Ainsi, dans la disposition des barrettes de connexion adoptée précédemment on obtient un profil d'occultation en forme de rideau se déplaçant des bords 3a vers le centre, qui est représenté de façon schématique sur la figure 8.

On peut également, de façon à obtenir un profil d'occultation plus régulier, adopter suivant l'invention une configuration du type de celle représentée sur la figure 9.

Pour obtenir celle-ci, après le dépôt sur le substrat 3 de la couche 4 formant l'électrode inférieure, et ainsi qu'expliqué précédemment, on réalise un margeage total 5 à travers cette dernière, dans chacun des angles du substrat 3 (traits pointillés sur la figure), de façon à former dans celle-ci une zone libre 4a en forme d'équerre. On dépose ensuite les diverses couches fonctionnelles électrochromes 7 et la couche 9 formant l'électrode supérieure. On réalise ensuite au travers de celle-ci un margeage sélectif 12 (représenté en trais continus sur la figure) en traversant les couches déposées jusqu'à l'électrode inférieure 4 et sans traverser celle-ci. On donne à ce margeage 12 la forme d'une ligne continue fermée en forme de rectangle qui se situe en périphérie du substrat 3 et est centrée au milieu de chacun des côtés de celui-ci et qui partage la surface de l'électrode supérieure en deux zones, à savoir une zone libre 9a et une zone active 9b contenant la surface active CDEF du dispositif.

On aurait pu également, ainsi que représenté sur la figure 8a, réaliser chacun des margeages sélectifs 12 uniquement sur trois côtés, le quatrième se confondant avec le bord du substrat.

Dans une autre variante non suivant l'invention, qui est représentée sur la figure 10, on pourrait également réaliser un margeage total 5 (traits en pointillés) sur la périphérie complète du substrat 3, la barrette de connexion 15 réunie à l'électrode inférieure 4 étant soudée à l'intérieur de celui-ci, dans une zone libre 9a délimitée par un margeage sélectif 12 s'étendant suivant une ligne fermée, et la barrette de connexion 17 réunie à l'électrode supérieure 9 étant soudée à l'extérieur de celle-ci, au droit de la zone libre 4a de l'électrode inférieure 4.

On a ainsi représenté sur la figure 11 une application non suivant l'invention dans laquelle on souhaite contrôler de façon individuelle ou simultanée l'opacité de quatre fenêtres 27 d'une paroi vitrée.

A cet effet la partie centrale du substrat, en l'espèce de forme carrée, est subdivisée en quatre surfaces actives CDEF contiguës. Pour ce faire on a réalisé un margeage total au travers de l'électrode inférieure 4, délimitant ainsi au niveau de celle-ci une zone libre centrale 4a en forme de croix (représentée en traits pointillés sur la figure 11), puis, après mise en place des couches électrochrome fonctionnelles 7 et de la couche 9 formant la seconde électrode, on a réalisé un margeage total 12 dans les quatre angles définissant au niveau de l'électrode supérieure quatre zones libres 9a en forme d'équerre. Les barrettes de connexion 15 de l'électrode supérieure 9 sont en forme de croix et sont disposées au droit de la zone libre 4a de l'électrode inférieure 4, et les barrettes de connexion 17 de l'électrode inférieure 4 sont en forme d'équerre et prennent place dans la zone libre 9a de l'électrode supérieure 9 et sont soudées, notamment par soudure à ultrasons, à l'électrode inférieure 4. Chacun des quatre dispositifs ainsi constitués peut être commandé de façon individuelle lorsque les éléments de connexion 17 sont connectés individuellement. Ces dispositifs pourraient également bien entendu être commandés de façon globale par la réunion de leurs barrettes de connexion.

La présente invention permet ainsi à la fois de supprimer du processus de fabrication des dispositifs électrochrome l'étape critique de mise en place et de retrait des adhésifs de masquage, ce qui se traduit par un gain de temps important, tout en en permettant d'améliorer la fiabilité dans le temps de ces dispositifs en permettant de relier leurs électrodes par soudure aux moyens de connexion. Elle permet de plus, en permettant de diminuer le courant de fuite dans des proportions importantes, de réaliser un dispositif électrochrome présentant un temps de réponse réduit et une plus faible consommation électrique. Elle permet enfin de rendre maximale la surface active CDEF du dispositif par rapport aux dimensions du substrat support et de contrôler la forme du profil d'occultation du dispositif.

La présente invention est également applicable aux dispositifs électrochromes dans lesquels, afin d'augmenter la conductivité de l'électrode supérieure on adjoint à celle-ci un réseau de fils conducteurs parallèles.

En effet on sait que l'on fait appel habituellement pour constituer les électrodes inférieure et supérieure des dispositifs électrochromes, à un matériau d'oxyde métallique dopé tel que l'oxyde d'étain dopé au fluor (SnO₂ :F) ou l'oxyde d'indium dopé à l'étain (ITO) que l'on peut déposer sur différents substrats à chaud, notamment par pyrolyse sur du verre, comme la technique dite CVD, ou à froid notamment par des techniques sous vide de pulvérisation cathodique.

On a constaté que, dans les épaisseurs où elles restent transparentes, les couches à base de ces matériaux ne sont pas suffisamment conductrices du courant électrique, si bien que lorsque l'on applique entre leurs bornes la tension électrique appropriée pour provoquer la modification de changement d'état nécessaire à une modification de leur transmission, elles augmentent le temps de réponse du système, ou temps de commutation.

Plus précisément, dans le cas par exemple où les deux couches électroconductrices sont constituées d'oxyde d'indium dopé à l'étain (ITO), la résistivité de la couche de base, ou couche inférieure, qui est de l'ordre de 3 à 5 Ω/carré passe à 60-70 Ω/carré pour la couche supérieure en raison de sa plus faible épaisseur. On sait en effet que si la couche de base a une épaisseur de l'ordre de 500 nm, la couche supérieure quant à elle n'a qu'une épaisseur de l'ordre de 100 nm et ceci pour des raisons essentiellement liées à la contrainte mécanique générée dans l'empilement.

Cette différence de résistivité entre les couches inférieure et supérieure est à l'origine du ralentissement du temps de commutation du dispositif, c'est-à-dire du temps nécessaire pour que le système passe de son état le plus transparent à son état le plus opaque. Un tel ralentissement contribue de plus à la formation du phénomène de « halo » mentionné précédemment.

Pour pallier un tel inconvénient on a proposé, dans la demande WO 00/57243, d'augmenter la conductivité électrique de la couche supérieure conductrice en adjoignant à celle-ci un réseau de fils conducteurs écartés entre eux d'une distance de l'ordre de 1 à 3mm.

Ainsi que représenté sur les figures 12a et 12b non suivant l'invention, un tel réseau de fils 30 est disposé sur une feuille support intercalaire 32 à base de polymère thermoplastique, et notamment une feuille de polyuréthane ou de polyvinylbutyral (PVB) qui, lors du feuilletage de l'ensemble du dispositif, applique le réseau de fils 30 contre l'électrode supérieure 9. On ramène ainsi la résistivité de cette dernière à des valeurs de l'ordre de 0,5 Ω/carré et, ce faisant, on diminue le temps de commutation du système ainsi que le phénomène de halo précédemment mentionné.

On peut également suivant l'invention réaliser sur un même substrat support plusieurs dispositifs électrochromes 1 qui, en fin de réalisation, seront séparés par découpe du substrat suivant des lignes de découpe 34 représentées en traits mixtes sur la figure 13 non suivant l'invention, de façon à constituer des dispositifs électrochromes spécifiques 1.

Un tel exemple permet de ne réaliser que quatre margeages de type total et quatre margeages de type sélectif pour quatre dispositifs, ce qui représente une simplification et un gain de temps au niveau de la fabrication.

## Revendications

1. Dispositif électrochrome à transmission ou réflexion contrôlée d'au moins une surface active (CDEF), de type électro-commandable, comportant sur un substrat porteur (3) un empilement comprenant au moins successivement une couche formant une électrode inférieure électroconductrice (4), diverses couches fonctionnelles (7) dont au moins une couche électrochrome, l'une au moins (6,7a) de ces couches étant isolante électriquement, et une électrode supérieure électroconductrice (9), dans lequel :
- au moins un margeage (5), dit total, s'étend à partir de la couche isolante (6,7a) sans traverser celle-ci, et traverse la/les couches (4,2) la séparant du substrat (3), ce margeage total (5) séparant la surface de l'électrode inférieure (4) en deux zones isolées électriquement l'une de l'autre, à savoir une zone libre (4a) au droit de laquelle l'électrode supérieure (9) étant réunie par soudure à un premier connecteur d'amenée de courant (15), et une zone active (4b) contenant la surface active (CDEF),
- au moins un margeage (12), dit sélectif, traverse l'électrode supérieure (9) et les différentes couches séparant celle-ci de l'électrode inférieure (4) sans traverser cette dernière, ce margeage sélectif (12) séparant la surface de l'électrode supérieure (9) en deux zones isolées électriquement l'une de l'autre, à savoir une zone libre (9a) sur laquelle est disposé un second connecteur d'amenée de courant (17) qui est relié par soudure à la zone active (4b) de l'électrode inférieure (4), et une zone active (9b) contenant la surface active (CDEF), et **caractérisé en ce que**
la zone libre (4a) de l'électrode inférieure (4) étant liée par soudure au premier connecteur d'amenée du courant (15)
et **en ce que** les margeages de type total (5) sont réalisés aux quatre coins du substrat (3) de façon à constituer des zones libres (4a) sensiblement en forme d'équerre, et **en ce que** les margeages de type sélectif (12) sont réalisés sensiblement au milieu de la périphérie d'au moins trois des quatre côtés de celui-ci de façon à constituer des zones libres (9a) sensiblement rectangulaires.

2. Dispositif électrochrome à transmission contrôlée suivant la revendication 1, **caractérisé en ce que** le substrat porteur (3) est un substrat à fonction verrière notamment en verre ou en matière plastique.

3. Dispositif électrochrome à transmission contrôlée suivant l'une des revendications précédentes **caractérisé en ce que** l'électrode supérieure (9) est recouverte d'au moins une couche de protection contre l'humidité (11), cette dernière étant traversée par ledit margeage sélectif (12).

4. Dispositif électrochrome à transmission contrôlée suivant l'une des revendications précédentes **caractérisé en ce qu'**au moins l'une des électrodes (4,9) est formée d'au moins une couche d'oxyde mixte d'étain et d'indium (ITO).

5. Dispositif électrochrome à transmission contrôlée suivant l'une des revendications précédentes **caractérisé en ce que** l'électrode supérieure (9) est en contact avec un réseau de fils fins (30), conducteurs du courant électrique et reliés au premier connecteur d'amenée de courant (15).

6. Dispositif électrochrome à transmission contrôlée suivant la revendication 5 **caractérisé en ce que** le réseau de fils (30) est supporté par un support (32) notamment constitué d'un polymère thermoplastique, tel que par exemple du polyuréthane ou du polyvinylbutyral (PVB).

7. Dispositif électrochrome à transmission contrôlée suivant l'une des revendications précédentes **caractérisé en ce que** les zones libres (4a, 9a) définies par les margeages de type total (5) et sélectif (12) sont situées en périphérie de celui-ci.

8. Dispositif électrochrome à transmission contrôlée suivant la revendication 7 **caractérisé en ce que** le substrat (3) est de forme rectangulaire et **en ce que** les margeages de type total (5) et sélectif (12) sont respectivement réalisés parallèlement à des côtés opposés (3a,3b) du substrat (3).

9. Procédé de fabrication d'un dispositif électrochrome à transmission ou à réflexion contrôlée d'au moins une surface active (CDEF), de type électrocommandable, comportant, sur un substrat porteur (3), un empilement comprenant au moins successivement une couche électroconductrice formant une électrode inférieure (4), et diverses couches fonctionnelles dont au moins une couche électrochrome, l'une au moins de ces couches étant isolante électriquement, et une couche électroconductrice formant une électrode supérieure (9), comportant les étapes consistant à :
- déposer, sur au moins une partie de la surface du substrat (3), au moins une couche électroconductrice formant l'électrode inférieure (4), et les couches précédant ladite couche isolante électriquement,
- réaliser, à partir de cette dernière, sans traverser celle-ci, au moins un margeage total (5) de la/des couches la séparant du substrat (3), chaque margeage total (5) partageant la surface de l'électrode inférieure (4) en deux zones isolées électriquement l'une de l'autre, à savoir une zone libre (4a), et une zone active (4b) contenant la surface active (CDEF), les margeages de type total (5) sont réalisés aux quatre coins du substrat (3) de façon à constituer des zones libres (4a) sensiblement en forme d'équerre,
- déposer sur les zones libre et active (4a,4b), la couche isolante électriquement (7a), les diverses autres couches fonctionnelles (7) et la couche électro-conductrice formant l'électrode supérieure(9),
- réaliser au moins un margeage sélectif (12) à travers cette dernière et à travers les différentes couches séparant celle-ci de l'électrode inférieure (4) sans traverser cette dernière, chaque margeage sélectif (12) partageant la surface de l'électrode supérieure (9) en deux zones isolées électriquement l'une de l'autre, à savoir une zone libre (9a), et une zone active (9b) contenant la surface active (CDEF), les margeages de type sélectif (12) sont réalisés sensiblement au milieu de la périphérie d'au moins trois des quatre côtés de celui-ci de façon à constituer des zones libres (9a) sensiblement rectangulaires,
- relier par soudure un premier connecteur d'amenée du courant (15) à la zone active (9b) de l'électrode supérieure (9) et à la zone libre (4a) de l'électrode inférieure (4),
- relier par soudure un second connecteur d'amenée de courant (17) à la zone libre (9a) de l'électrode supérieure (9) et à la zone active (4b) de l'électrode inférieure située au droit de celle-ci.

10. Procédé de fabrication d'un dispositif électrochrome à transmission contrôlée suivant la revendication 9, **caractérisé en ce que** au moins une des liaisons par soudure est réalisée par soudure ultrasons.

11. Procédé de fabrication d'un dispositif électrochrome à transmission contrôlée suivant la revendication 9 ou 10, **caractérisé en ce que** l'on réalise au moins l'un des margeages (5,12) au moyen d'un faisceau laser.

12. Procédé de fabrication d'un dispositif électrochrome à transmission contrôlée suivant l'une des revendications 9 à 11, dans lequel on réalise sur un même substrat porteur, plusieurs dispositifs électrochromes suivant l'une des revendications 1 à 8, **caractérisé en ce que**, une fois ces derniers terminés, on réalise une découpe du substrat porteur et de l'ensemble des couches déposées sur celui-ci, de façon à constituer des dispositifs électrochromes spécifiques.

13. Vitrage électrochrome, **caractérisé en ce qu'**il comporte un dispositif électrochrome selon l'une des revendications 1 à 8, présentant notamment une transmission et/ou réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

14. Utilisation du vitrage selon la revendication 13 en tant que vitrage pour le bâtiment, vitrage pour l'automobile, vitrage de véhicules industriels ou de transport collectif, ferroviaire, maritime, aérien, agricole , engin de chantier, rétroviseurs, miroirs, Display et affichage, obturateur pour dispositifs d'acquisition d'images.

## Patentansprüche

1. Elektrochrome Vorrichtung mit kontrollierter Durchlässigkeit oder Reflexion wenigstens einer aktiven Oberfläche (CDEF), vom elektrisch steuerbaren Typ, umfassend, auf einem Trägersubstrat (3), einen Stapel, der wenigstens nacheinander eine Schicht, welche eine elektrisch leitende untere Elektrode (4) bildet, verschiedene Funktionsschichten (7), darunter wenigstens eine elektrochrome Schicht, wobei wenigstens eine (6, 7a) dieser Schichten elektrisch isolierend ist, sowie eine elektrisch leitende obere Elektrode (9) umfasst, wobei:
- wenigstens eine sogenannte vollständige Randentschichtung (5) sich von der isolierenden Schicht (6, 7a) aus erstreckt, ohne diese zu durchziehen, und die Schicht(en) (4, 2), die sie von dem Substrat (3) trennt/trennen, durchzieht, wobei diese vollständige Randentschichtung (5) die Oberfläche der unteren Elektrode (4) in zwei voneinander elektrisch isolierte Bereiche trennt, nämlich einen freien Bereich (4a), dem gegenüber die obere Elektrode (9) mit einem ersten Stromzuführverbinder (15) verschweißt ist, und einen aktiven Bereich (4b), der die aktive Oberfläche (CDEF) enthält,
- wenigstens eine sogenannte selektive Randentschichtung (12) die obere Elektrode (9) und die verschiedenen Schichten, welche diese von der unteren Elektrode (4) trennen, durchzieht, ohne diese letztere zu durchziehen, wobei diese selektive Randentschichtung (12) die Oberfläche der oberen Elektrode (9) in zwei voneinander elektrisch isolierte Bereiche trennt, nämlich einen freien Bereich (9a), an dem ein zweiter Stromzuführverbinder (17) angeordnet ist, der mit dem aktiven Bereich (4b) der unteren Elektrode (4) verschweißt ist, und einen aktiven Bereich (9b), der die aktive Oberfläche (CDEF) enthält,
und **dadurch gekennzeichnet, dass**
der freie Bereich (4a) der unteren Elektrode (4) mit dem ersten Stromzuführverbinder (15) verschweißt ist,
und dass die Randentschichtungen vom vollständigen Typ (5) an den vier Ecken des Substrats (3) ausgebildet sind, um im Wesentlichen winkelförmige freie Bereiche (4a) zu bilden,
und dass die Randentschichtungen vom selektiven Typ (12) im Wesentlichen in der Mitte des Umfangs von wenigstens drei der vier Seiten dessen ausgebildet sind, um im Wesentlichen rechteckige freie Bereiche (9a) zu bilden.

2. Elektrochrome Vorrichtung mit kontrollierter Durchlässigkeit nach Anspruch 1, **dadurch gekennzeichnet, dass** das Trägersubstrat (3) ein Substrat mit Glasfunktion, insbesondere aus Glas oder aus Kunststoff ist.

3. Elektrochrome Vorrichtung mit kontrollierter Durchlässigkeit nach einem der vorhergehenden Ansprüche, **dadurch gekennzeichnet, dass** die obere Elektrode (9) mit wenigstens einer Feuchtigkeitsschutzschicht (11) überzogen ist, wobei diese letztere von der selektiven Randentschichtung (12) durchzogen ist.

4. Elektrochrome Vorrichtung mit kontrollierter Durchlässigkeit nach einem der vorhergehenden Ansprüche, **dadurch gekennzeichnet, dass** wenigstens eine der Elektroden (4, 9) von wenigstens einer Zinn- und Indium-Mischoxidschicht (ITO) gebildet ist.

5. Elektrochrome Vorrichtung mit kontrollierter Durchlässigkeit nach einem der vorhergehenden Ansprüche, **dadurch gekennzeichnet, dass** die obere Elektrode (9) mit einem Netz aus feinen Drähten (30), die den elektrischen Strom leiten und mit dem ersten Stromzuführverbinder (15) verbunden sind, in Kontakt ist.

6. Elektrochrome Vorrichtung mit kontrollierter Durchlässigkeit nach Anspruch 5, **dadurch gekennzeichnet, dass** das Drahtnetz (30) von einem Träger (32) getragen ist, der insbesondere aus einem thermoplastischen Polymer, wie zum Beispiel Polyurethan oder Polyvinylbutyral (PVB), besteht.

7. Elektrochrome Vorrichtung mit kontrollierter Durchlässigkeit nach einem der vorhergehenden Ansprüche, **dadurch gekennzeichnet, dass** die freien Bereiche (4a, 9a), die durch die Randentschichtungen vom vollständigen (5) und selektiven Typ (12) definiert sind, an dessen Umfang gelegen sind.

8. Elektrochrome Vorrichtung mit kontrollierter Durchlässigkeit nach Anspruch 7, **dadurch gekennzeichnet, dass** das Substrat (3) eine Rechteckform aufweist und dass die Randentschichtungen vom vollständigen (5) und selektiven Typ (12) jeweils parallel zu gegenüberliegenden Seiten (3a, 3b) des Substrats (3) ausgebildet sind.

9. Verfahren zur Herstellung einer elektrochromen Vorrichtung mit kontrollierter Durchlässigkeit oder Reflexion wenigstens einer aktiven Oberfläche (CDEF), vom elektrisch steuerbaren Typ, umfassend, auf einem Trägersubstrat (3), einen Stapel, der wenigstens nacheinander eine elektrisch leitende Schicht, welche eine untere Elektrode (4) bildet, und verschiedene Funktionsschichten, darunter wenigstens eine elektrochrome Schicht, wobei wenigstens eine dieser Schichten elektrisch isolierend ist, sowie eine elektrisch leitende Schicht, die eine obere Elektrode (9) bildet, umfasst, umfassend die folgenden Schritte, die darin bestehen:
- auf wenigstens einem Teil der Oberfläche des Substrats (3) wenigstens eine elektrisch leitende Schicht, welche die untere Elektrode (4) bildet, und die Schichten, welche der elektrisch isolierenden Schicht vorausgehen, abzuscheiden,
- ausgehend von dieser letzteren, ohne sie zu durchziehen, wenigstens eine vollständige Randentschichtung (5) der Schicht(en), die sie von dem Substrat (3) trennt/trennen, auszubilden, wobei jede vollständige Randentschichtung (5) die Oberfläche der unteren Elektrode (4) in zwei voneinander elektrisch isolierte Bereiche trennt, nämlich einen freien Bereich (4a) und einen aktiven Bereich (4b), der die aktive Oberfläche (CDEF) enthält, die Randentschichtungen vom vollständigen Typ (5) sind an den vier Ecken des Substrats (3) ausgebildet, um im Wesentlichen winkelförmige freie Bereiche (4a) zu bilden,
- auf dem freien und dem aktiven Bereich (4a, 4b) die elektrisch isolierende Schicht (7a), die verschiedenen anderen Funktionsschichten (7) und die die obere Elektrode (9) bildende, elektrisch leitende Schicht abzuscheiden,
- wenigstens eine selektive Randentschichtung (12) durch diese letztere und durch die verschiedenen Schichten, welche diese von der unteren Elektrode (4) trennen, auszubilden, ohne diese letztere zu durchziehen, wobei jede selektive Randentschichtung (12) die Oberfläche der oberen Elektrode (9) in zwei voneinander elektrisch isolierte Bereiche trennt, nämlich einen freien Bereich (9a) und einen aktiven Bereich (9b), der die aktive Oberfläche (CDEF) enthält, die Randentschichtungen vom selektiven Typ (12) sind im Wesentlichen in der Mitte des Umfangs von wenigstens drei der vier Seiten dessen ausgebildet, um im Wesentlichen rechteckige freie Bereiche (9a) zu bilden,
- einen ersten Stromzuführverbinder (15) mit dem aktiven Bereich (9b) der oberen Elektrode (9) und mit dem freien Bereich (4a) der unteren Elektrode (4) zu verschweißen,
- einen zweiten Stromzuführverbinder (17) mit dem freien Bereich (9a) der oberen Elektrode (9) und mit dem aktiven Bereich (4b) der ihr gegenüberliegenden unteren Elektrode zu verschweißen.

10. Verfahren zur Herstellung einer elektrochromen Vorrichtung mit kontrollierter Durchlässigkeit, nach Anspruch 9, **dadurch gekennzeichnet, dass** wenigstens eine der Schweißverbindungen durch Ultraschallschweißen hergestellt wird.

11. Verfahren zur Herstellung einer elektrochromen Vorrichtung mit kontrollierter Durchlässigkeit, nach Anspruch 9 oder 10, **dadurch gekennzeichnet, dass** wenigstens eine der Randentschichtungen (5, 12) mittels eines Laserstrahls ausgebildet wird.

12. Verfahren zur Herstellung einer elektrochromen Vorrichtung mit kontrollierter Durchlässigkeit, nach einem der Ansprüche 9 bis 11, wobei auf einem gleichen Trägersubstrat mehrere elektrochrome Vorrichtungen nach einem der Ansprüche 1 bis 8 ausgebildet werden, **dadurch gekennzeichnet, dass** sobald letztere fertiggestellt sind, ein Zuschneiden des Trägersubstrats und aller auf diesem abgeschiedenen Schichten vollzogen wird, um spezifische elektrochrome Vorrichtungen zu bilden.

13. Elektrochrome Verglasung, **dadurch gekennzeichnet, dass** sie eine elektrochrome Vorrichtung nach einem der Ansprüche 1 bis 8 umfasst, mit insbesondere einer veränderlichen Licht- und/oder Energiedurchlässigkeit und/oder -reflexion, mit dem Substrat oder wenigstens einem Teil der Substrate, transparent oder teilweise transparent, aus Kunststoff, die vorzugsweise als Mehrfach- und/oder Verbundverglasung oder als Doppelverglasung angebracht ist.

14. Verwendung der Verglasung nach Anspruch 13 als Verglasung für Gebäude, Verglasung für Kraftfahrzeuge, Verglasung für industrielle Fahrzeuge oder Fahrzeuge des öffentlichen Personen-, Schienen-, See-, Luft-, Landwirtschaftsverkehrs, Baumaschinen, Rückspiegel, Spiegel, Displays und Anzeigen, Blenden für Bildaufnahmevorrichtungen.

## Claims

1. Electrochromic device having controlled transmission or reflection of at least one electrically controllable active area (CDEF), having, on a carrier substrate (3), a multilayer stack comprising at least, in succession, a layer forming a lower electrically conductive electrode (4), various functional layers (7) at least one of which is an electrochromic layer, at least one (6, 7a) of these layers being electrically insulating, and an upper electrically conductive electrode (9), in which device:
- at least one partition (5), denoted "total", extends from the insulating layer (6, 7a) without passing through it, and passes through the layer(s) (4,2) separating the insulating layer from the substrate (3), this total partition (5) dividing the surface of the lower electrode (4) into two regions electrically isolated from each other, namely a free region (4a), in line with which the upper electrode (9) is soldered to a first current-supply connector (15), and an active region (4b) containing the active area (CDEF);
and
- at least one partition (12), denoted "selective", passes through the upper electrode (9) and the various layers separating the upper electrode from the lower electrode (4) without passing through the latter, this selective partition (12) dividing the surface of the upper electrode (9) into two regions electrically isolated from each other, namely a free region (9a) on which a second current-supply connector (17) is deposited, which connector is soldered to the active region (4b) of the lower electrode (4), and an active region (9b) containing the active area (CDEF), and **characterized in that**
the free region (4a) of the lower electrode (4) is soldered to the first current-supply connector (15)
and **in that** the total partitions (5) are produced in the four corners of the substrate (3) so as to constitute substantially square free regions (4a) and **in that** the selective partitions (12) are produced substantially in the middle of the periphery of at least three of the four edges of said device so as to constitute substantially rectangular free regions (9a).

2. Controlled-transmission electrochromic device according to Claim 1, **characterized in that** the carrier substrate (3) has a glazing function and, in particular, is made of glass or plastic.

3. Controlled-transmission electrochromic device according to one of the preceding claims, **characterized in that** the upper electrode (9) is covered with at least one moisture protection layer (11), the latter being penetrated by said selective partition (12).

4. Controlled-transmission electrochromic device according to one of the preceding claims, **characterized in that** at least one of the electrodes (4, 9) is formed from at least one indium tin oxide (ITO) layer.

5. Controlled-transmission electrochromic device according to one of the preceding claims, **characterized in that** the upper electrode (9) is in contact with an array of fine electrically conducting wires (30), connected to the first (current-supply) connector (15).

6. Controlled-transmission electrochromic device according to Claim 5, **characterized in that** the array of wires (30) is supported by a support (32) particularly one made of a thermoplastic polymer, such as, for example, polyurethane or polyvinyl butyral (PVB).

7. Controlled-transmission electrochromic device according to one of the preceding claims, **characterized in that** the free regions (4a, 9) defined by the total partitions (5) and selective partitions (12) are located on the periphery of said device.

8. Controlled-transmission electrochromic device according to Claim 7, **characterized in that** the substrate (3) is rectangular shaped and **in that** the total partitions (5) and selective partitions (12) are respectively produced so as to be parallel with opposed sides (3a, 3b) of the substrate (3).

9. Process for fabricating an electrochromic device having controlled transmission or reflection of at least one electrically controllable active area (CDEF), having on a carrier substrate (3), a multilayer stack comprising at least, in succession, an electrically conductive layer forming a lower electrode (4), various functional layers at least one of which is an electrochromic layer, at least one of these layers being electrically insulating, and an electrically conductive layer forming an upper electrode (9), comprising the steps consisting in:
- depositing, onto at least part of the surface of the substrate (3), at least one electrically conductive layer forming the lower electrode (4), and the layers preceding said electrically insulating layer;
- producing, starting from the electrically insulating layer, without passing through it, at least one total partition (5) of the layer(s) separating the insulating layer from the substrate (3), each total partition (5) dividing the surface of the lower electrode (4) into two regions electrically isolated from each other, namely a free region (4a), and an active region (4b) containing the active area (CDEF), the total partitions (5) being produced in the four corners of the substrate (3) so as to constitute substantially square free regions (4a);
- depositing, onto the free and the active regions (4a, 4b), the electrically insulating layer (7a), the various other functional layers (7) and the electrically conductive layer forming the upper electrode (9);
- producing at least one selective partition (12) through the upper electrode and through the various layers separating the upper electrode from the lower electrode (4) without passing through the latter, each selective partition (12) dividing the surface of the upper electrode (9) into two regions electrically isolated from each other, namely a free region (9a) and an active region (9b) containing the active area (CDEF), the selective partitions (12) being produced substantially in the middle of the periphery of at least three of the four edges of said device so as to constitute substantially rectangular free regions (9a);
- soldering a first current-supply connector (15) to the active region (9b) of the upper electrode (9) and to the free region (4a) of the lower electrode (4); and
- soldering a second current-supply connector (17) to the free region (9a) of the upper electrode (9) and to the active region (4b) of the lower electrode located in line with the latter.

10. Process for fabricating a controlled-transmission electrochromic device according to Claim 9, **characterized in that** at least one of the solder joints is ultrasonically soldered.

11. Process for fabricating a controlled-transmission electrochromic device according to Claim 9 or 10, **characterized in that** at least one of the partitions (5, 12) is produced by means of a laser beam.

12. Process for fabricating a controlled-transmission electrochromic device according to one of Claims 9 to 11, in which several electrochromic devices according to one of Claims 1 to 8 are produced on one and the same carrier substrate, **characterized in that**, once said devices are completed, the carrier substrate and all the layers deposited thereon are cut so as to constitute specific devices.

13. Electrochromic glazing, **characterized in that** it includes an electrochromic device according to one of Claims 1 to 8, in particular having a variable light and/or energy transmission and/or reflection, with the substrate or at least part of the substrates transparent or partially transparent, made of plastic, preferably mounted as multiple and/or laminated glazing or as double glazing.

14. Use of the glazing according to Claim 13 as architectural glazing, as automotive glazing, as glazing for industrial vehicles or for public transport - by rail, sea or air - for agricultural vehicles, for construction site machinery, for rear-view or wing mirrors or for other mirrors, for displays and signage and for camera shutters.
